(19)

Europäisches
Patentamt
European
Patent Office
Office européen
des brevets

(11) **EP 4 455 937 A1**

(12) **EUROPEAN PATENT APPLICATION**

(43) Date of publication:
**30.10.2024  Bulletin 2024/44**

(51) International Patent Classification (IPC):
**G06N 3/042** *(2023.01)*    **G06N 3/045** *(2023.01)*
**G06N 3/088** *(2023.01)*    **G06N 3/10** *(2006.01)*
**G06N 5/02** *(2023.01)*

(21) Application number: **23170383.6**

(22) Date of filing: **27.04.2023**

(52) Cooperative Patent Classification (CPC):
**G06N 3/042; G06N 3/045; G06N 3/088; G06N 3/09;
G06N 3/10;** G06N 5/02

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Aktiengesellschaft
80333 München (DE)**

(72) Inventors:
• **Hildebrandt, Marcel
  80634 München (DE)**
• **Mogoreanu, Serghei
  81827 München (DE)**
• **Pol, Sebastian
  90556 Seukendorf (DE)**

(74) Representative: **Siemens Patent Attorneys
Postfach 22 16 34
80506 München (DE)**

(54) **METHOD AND SYSTEM FOR RECOMMENDING A MACHINE LEARNING PIPELINE FOR AN INDUSTRIAL USE CASE**

(57)    For recommending a machine learning pipeline for an industrial use case a user interface (UI) receives a new case description (UCD), which is a free-form text description of a new industrial use case for machine learning, and a set of user provided attributes (UPA) that apply to the new industrial use case, wherein the user provided attributes (UPA) are stored as use case features (UCF). A graph database provides a knowledge graph (KG), wherein the knowledge graph (KG) contains information about a set of previous cases. A language model (LM) computes a description embedding (DE) for the new case description (UCD) and for each previous case description (D). A knowledge graph embedding model (KGE) encodes for each previous case a connectivity pattern of the knowledge graph (KG) into a graph embedding (GE). A first neural network (NN1) computes for each previous case a previous case embedding (PE). A second neural network (NN2) computes a use case embedding (UCE) for the new industrial use case. A non-parametric decoder scores each previous case embedding (PE) against the use case embedding (UCE), thereby producing a relevance score for each previous case. The previous case with the highest relevance score is selected. The user interface (UI) outputs the machine learning pipeline (MLP) that is linked in the knowledge graph (KG) to the previous case with the highest relevance score.

FIG 4

EP 4 455 937 A1

## Description

Over the past two decades, advancements in machine learning have transformed the factory floors and processes in a number of industries, ranging from process industries (e.g., oil and gas, power and utilities, water and wastewater) to hybrid industries (e.g., food and beverage, wind) to discrete industries (e.g., automotive manufacturing, aerospace, robotics). Making use of machine learning solutions in any of these industries requires the construction of an ETL (Extract, Transform, Load) pipeline, the selection of a suitable machine learning model and hyperparameters, and a deployment infrastructure. Performing all these steps from scratch is laborious and requires expertise about the domain and task at hand as well as dedicated knowledge about machine learning.

Currently, the task is addressed by manually selecting or constructing from scratch machine learning pipelines based on domain knowledge and machine learning expertise or via browsing catalogues of machine learning pipelines using static filters. However, the latter option might be laborious and error prone.

It is an object of the present invention to identify a problem in the prior art and to find a technical solution for this.

The objectives of the invention are solved by the independent claims. Further advantageous arrangements and embodiments of the invention are set forth in the respective dependent claims.

According to the method for recommending a machine learning pipeline for an industrial use case, the following operations are performed by components, wherein the components are hardware components and/or software components executed by one or more processors:

- receiving, by a user interface, a new case description, which is a free-form text description of a new industrial use case for machine learning, and a set of user provided attributes that apply to the new industrial use case, wherein the user provided attributes are stored as use case features,
- providing, by a graph database, a knowledge graph, wherein the knowledge graph contains for each previous case of a set of previous industrial use cases for machine learning

    - a node representing the previous case,
    - a previous case description of the previous case,
    - at least one node representing an attribute of the previous case, and
    - a node representing a machine learning pipeline that has been suitable for implementing machine learning for the previous case,

- computing, by a language model, a description embedding for the new case description and for each previous case description,

- encoding, by a knowledge graph embedding model, for each previous case a connectivity pattern of the knowledge graph into a graph embedding,
- computing for each previous case, by a first neural network receiving as input the graph embedding and the description embedding of the respective previous case, a previous case embedding,
- computing, by a second neural network receiving as input the use case features and the description embedding of the new case description, a use case embedding for the new industrial use case,
- scoring, by a non-parametric decoder, each previous case embedding against the use case embedding, thereby producing a relevance score for each previous case, in particular by computing a dot product,
- selecting the previous case with the highest relevance score, and
- outputting, by the user interface, the machine learning pipeline that is linked in the knowledge graph to the selected case.

The system for recommending a machine learning pipeline for an industrial use case comprises the following components, wherein the components are hardware components and/or software components executed by one or more processors:

- a user interface, configured for receiving a new case description, which is a free-form text description of a new industrial use case for machine learning, and a set of user provided attributes that apply to the new industrial use case, wherein the user provided attributes are stored as use case features,
- a graph database, configured for providing a knowledge graph, wherein the knowledge graph contains for each previous case of a set of previous industrial use cases for machine learning

    - a node representing the previous case,
    - a previous case description of the previous case,
    - at least one node representing an attribute of the previous case, and
    - a node representing a machine learning pipeline that has been suitable for implementing machine learning for the previous case,

- a language model, configured for computing a description embedding for the new case description and for each previous case description,
- a knowledge graph embedding model, configured for encoding for each previous case a connectivity pattern of the knowledge graph into a graph embedding,
- a first neural network, configured for receiving as input the graph embedding and the description embedding of the respective previous case, and for computing for each previous case a previous case embedding,

- a second neural network, configured for receiving as input the use case features and the description embedding of the new case description, and for computing a use case embedding for the new industrial use case,
- a non-parametric decoder, configured for scoring each previous case embedding against the use case embedding, thereby producing a relevance score for each previous case, in particular by computing a dot product,
- wherein the user interface is further configured for outputting the machine learning pipeline that is linked in the knowledge graph to the previous case with the highest relevance score.

The following advantages and explanations are not necessarily the result of the object of the independent claims. Rather, they may be advantages and explanations that only apply to certain embodiments or variants.

In connection with the invention, unless otherwise stated in the description, the terms "training", "generating", "computer-aided", "calculating", "determining", "reasoning", "retraining" and the like relate preferably to actions and/or processes and/or processing steps that change and/or generate data and/or convert the data into other data, the data in particular being or being able to be represented as physical quantities, for example as electrical impulses.

The term "computer" should be interpreted as broadly as possible, in particular to cover all electronic devices with data processing properties. Computers can thus, for example, be personal computers, servers, clients, programmable logic controllers (PLCs), handheld computer systems, pocket PC devices, mobile radio devices, smartphones, devices, or any other communication devices that can process data with computer support, processors, and other electronic devices for data processing. Computers can in particular comprise one or more processors and memory units.

In connection with the invention, a "memory", "memory unit" or "memory module" and the like can mean, for example, a volatile memory in the form of random-access memory (RAM) or a permanent memory such as a hard disk or a Disk.

The method and system, or at least some of their embodiments, support an engineer in the selection and construction process of a machine learning pipeline, in particular regarding the identification of a suitable machine learning pipeline based on the intended application area, the available data, and the task at hand.

The method and system, or at least some of their embodiments, are based on combining embeddings that encode topological information from a knowledge graph, attributes that further specify the entities in the knowledge graph, as well as information provided by a user via a free-form textual description.

The method and system, or at least some of their embodiments, provide a data-driven recommender where the user can describe her use case by providing both structured and unstructured information to get recommendations for machine learning pipelines. The unstructured information refers to the user describing her use case in free text, for example.

The method and system, or at least some of their embodiments, provide a fusion mechanism that leverages both the neural search capabilities of state-of-the-art language embedding models as well as attributes and the neighboring connectivity patterns of use cases which are modelled as entities in a knowledge graph.

In contrast to commonly used approaches based on static filtering, the method and system, or at least some of their embodiments, do not only rely on a set of predefined attributes. Instead, they allow the user to describe the use case at hand in her own words.

In an embodiment of the method and system, the attributes of the previous cases include equipped hardware, data modalities, and labels.

In another embodiment of the method and system, the language model is a pretrained transformer model.

The computer program product has program instructions for carrying out the method.

The provision device for the computer program product stores and/or provides the computer program product.

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. The embodiments may be combined with each other. Furthermore, the embodiments may be combined with any of the features described above. Unless stated otherwise, identical reference signs denote the same features or functionally identical elements between drawings. Included in the drawings are the following Figures:

Fig. 1    shows a first embodiment,

Fig. 2    shows another embodiment,

Fig. 3    shows an example of a suitable knowledge graph schema,

Fig. 4    shows an overall architecture of an embodiment of a method/system for recommending a machine learning pipeline for an industrial use case,

Fig. 5    shows a flowchart of a possible exemplary embodiment of a method for recommending a machine learning pipeline for an industrial use case.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

The described components can each be hardware components or software components. For example, a software component can be a software module such as a software library; an individual procedure, subroutine, or function; or, depending on the programming paradigm, any other portion of software code that implements the function of the software component. A combination of hardware components and software components can occur, in particular, if some of the effects according to the invention are preferably exclusively implemented by special hardware (e.g., a processor in the form of an ASIC or FPGA) and some other part by software.

Nickel, M., Tresp, V. & Kriegel, H.-P.: A three-way model for collective learning on multi-relational data, in Icml 11 (2011), pp. 809-816, disclose RESCAL, a widely used graph embedding algorithm. The entire contents of that document are incorporated herein by reference.

Bordes, A. et al.: Translating embeddings for modeling multi-relational data, in Advances in neural information processing systems (2013), pp. 2787-2795, disclose TransE, which is a translation based embedding method. The entire contents of that document are incorporated herein by reference. Schlichtkrull, M., Kipf, T.N., Bloem, P., van den Berg, R., Titov, I. and Welling, M.: Modeling Relational Data with Graph Convolutional Networks, arXiv preprint arXiv:1703.06103 (2017), disclose a type of Graph Convolutional Neural networks abbreviated as R-GCN. The entire contents of that document are incorporated herein by reference.

Vashishth, Shikhar, et al. "Composition-based multi-relational graph convolutional networks." arXiv preprint arXiv:1911.03082v2 [cs.LG] (2019), available on the internet at https://doi.org/10.48550/arXiv.1911.03082 on April 4, 2023, disclose composition-based multi-relational graph convolutional networks abbreviated as CompGCN. The entire contents of that document are incorporated herein by reference.

Vaswani et al.: "Attention is all you need", arXiv:1706.03762v5 [cs.CL], available on the internet at https://doi.org/10.48550/arXiv.1706.03762 on March 21, 2023, discloses a pretrained transformer model that can be used as a language model. The entire contents of that document are incorporated herein by reference.

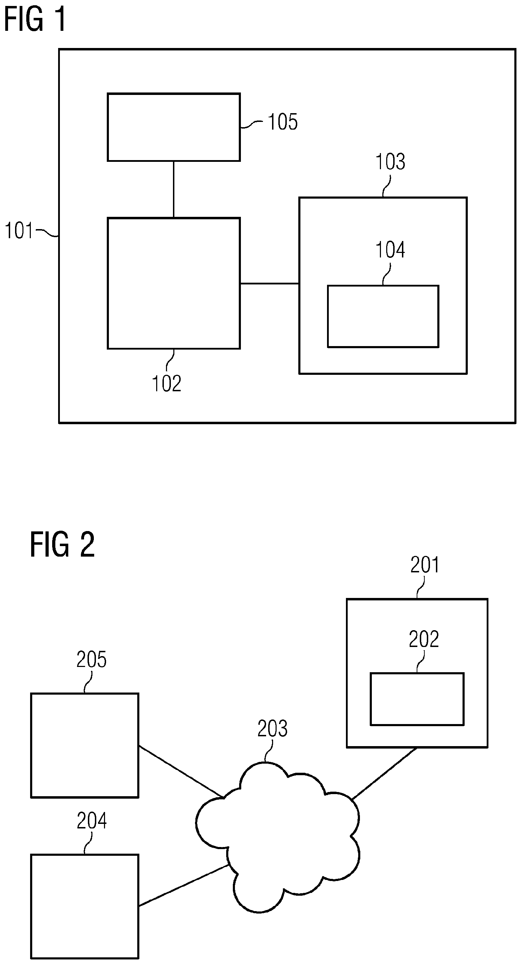

Fig. 1 shows one sample structure for computer-implementation of the invention which comprises:

(101)    computer system
(102)    processor
(103)    memory

(104)    computer program (product)
(105)    user interface

In this embodiment of the invention the computer program product 104 comprises program instructions for carrying out the invention. The computer program 104 is stored in the memory 103 which renders, among others, the memory and/or its related computer system 101 a provisioning device for the computer program product 104. The system 101 may carry out the invention by executing the program instructions of the computer program 104 by the processor 102. Results of invention may be presented on the user interface 105. Alternatively, they may be stored in the memory 103 or on another suitable means for storing data.

Fig. 2 shows another sample structure for computer-implementation of the invention which comprises:

(201)    provisioning device
(202)    computer program (product)
(203)    computer network / Internet
(204)    computer system
(205)    mobile device / smartphone

In this embodiment the provisioning device 201 stores a computer program 202 which comprises program instructions for carrying out the invention. The provisioning device 201 provides the computer program 202 via a computer network / Internet 203. By way of example, a computer system 204 or a mobile device / smartphone 205 may load the computer program 202 and carry out the invention by executing the program instructions of the computer program 202.

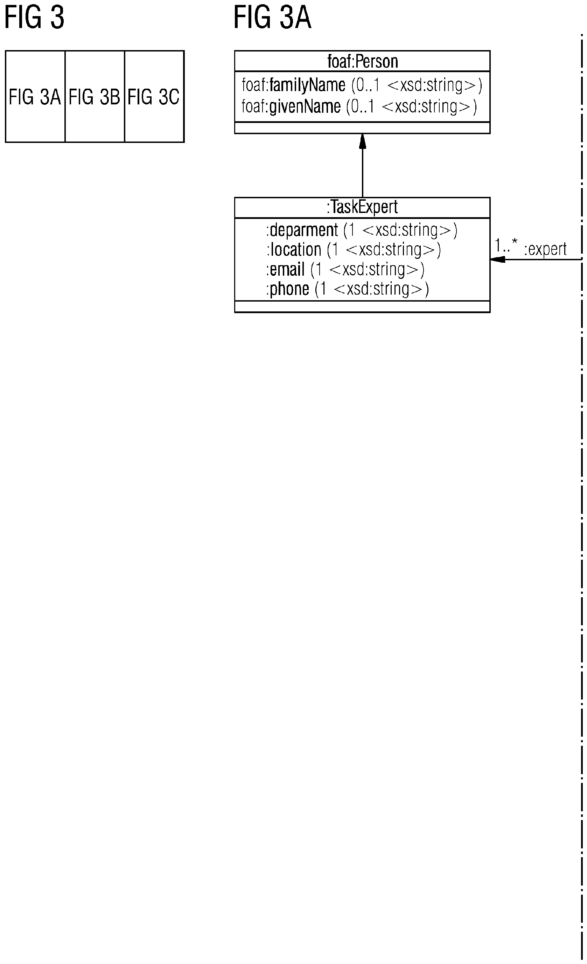

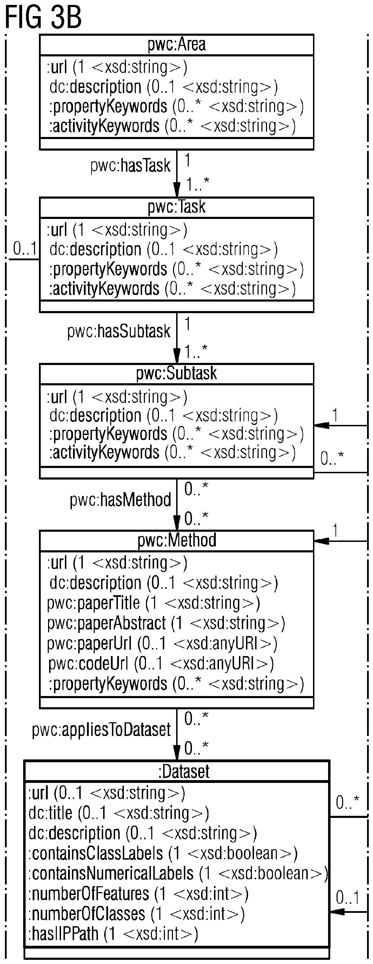

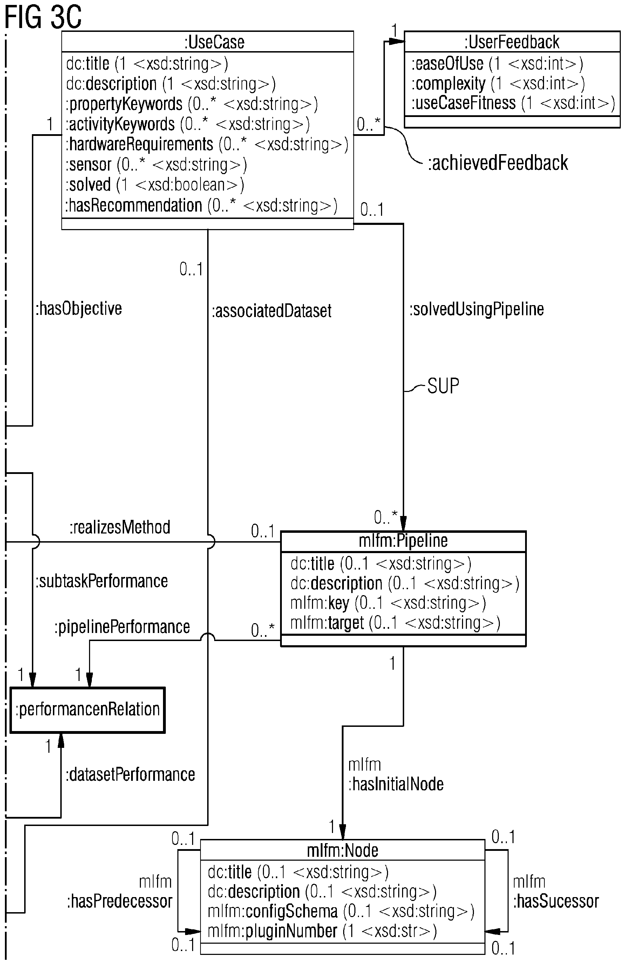

Preferably, the embodiments shown in Figs. 3 to 5 can be implemented with a structure as shown in Fig. 1 or Fig. 2.

On a high level, the embodiments described below operate in the following setting:
The user is a subject matter expert that faces a particular industrial problem in a new industrial use case. Initially, there is either no machine learning pipeline deployed that addresses the problem, or the current pipeline is working sub-optimally. Thereby, it is assumed that the user is not a machine learning expert and may not be able to pin down the task at hand using the correct technical vocabulary. For example, the user might be a service engineer that wants to perform predictive maintenance for a fleet of motors but depending on the available data (e.g., depending on the equipped sensors, observed failures, or previous maintenance events), predictive maintenance in this setting may correspond to very different machine learning tasks ranging from unsupervised time-series anomaly detection based on vibration data to supervised image classification based on a visual quality inspection station. The objective of the proposed system is to identify a machine learning pipeline in an efficient manner that can operate in the required setting (i.e., it addresses the correct machine learning task, correctly makes use of the available data, hardware, sensors, etc.).

The following embodiments process both an unstructured, free-form description of a new use case as well as a knowledge graph that stores heterogeneous information about previous industrial use cases, datasets, and machine learning pipelines, and provide a fusion mechanism for the outputs of a language model and a graph neural network designed to encode the context from the knowledge graph surrounding each use case.

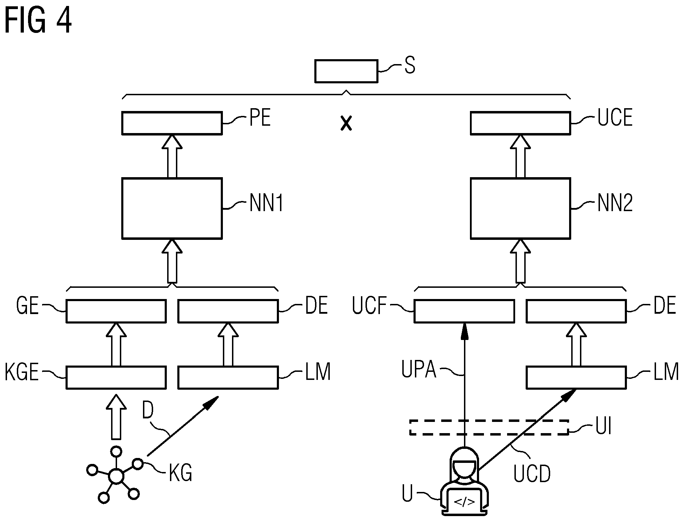

Fig. 4 shows the overall architecture of an embodiment of a method/system for recommending a machine learning pipeline for an industrial use case. Illustrated in Fig. 4 are several components that the embodiment consists of.

A knowledge graph KG, e.g., stored in a graph database, structures information on different machine learning tasks, datasets, industrial use cases, and machine learning pipelines in terms of an RDF graph. A concrete example of a suitable knowledge graph schema is shown in Fig. 3.

In the following embodiments, we identify the knowledge graph KG with a heterogeneous graph G represented as a list of triples. That means $G \subset E \times R \times E$, where $E$ denotes the vertex set and $R$ the set of edge types. The purpose of the knowledge graph KG is to structure relations between the stored entities. In particular, the knowledge graph KG stores various predefined attributes of previous cases (i.e., previous industrial use cases for machine learning) with regards to the equipped hardware, data modalities, labels, etc., and the information which machine learning pipelines have been deployed in which previous cases (via a "solvedUsingPipeline" relation SUP shown in Fig. 3). Apart from the above-mentioned set of predefined attributes, previous case descriptions D, which are free-form text descriptions, are also assigned to the previous cases as data attributes in the knowledge graph KG.

A user interface UI receives a new case description UCD from a user U, which is a free-form text problem definition for the new use case, and a set of user provided attributes UPA that apply to the new use case.

A language model LM, for example a pretrained transformer model, produces a description embedding DE, which is a vector space embedding, for each previous case description D in the knowledge graph KG on the one hand, and for the new case description UCD on the other hand. Formally, the language model LM corresponds to a mapping $f\colon \mathcal{D} \to \mathbb{R}^n$ , where $\mathcal{D}$ denotes the space of use case descriptions and $n$ the dimensionality of the embedding space. The vector space embeddings allow to compute similarities between texts (e.g., angular similarities) to retrieve similar use cases.

A knowledge graph embedding model KGE encodes the connectivity pattern of the knowledge graph KG into a graph embedding GE. Popular candidates for the knowledge graph embedding model KGE include RESCAL, TransE, or graph neural network based methods such as R-GCN and CompGCN. Formally, the knowledge graph embedding model KGE corresponds to a mapping $g\colon E \to \mathbb{R}^m$ , where $E$ denotes the set of entities (of the knowledge graph KG, see above) and $m$ the dimensionality of the knowledge graph embedding space.

The current embodiment provides a tool that is capable of matching pipelines stored in the knowledge graph KG to industrial use cases. As shown in Fig. 4, the embodiment is based on a dual neural network architecture that computes embeddings of the previous cases in the knowledge graph KG (including their machine learning pipelines) and the new use case in parallel. In particular, a first neural network NN1 computes a previous case embedding PE for each previous case, and a second neural network NN2 computes a use case embedding UCE for the new use case. In a final step, the embodiment employs a late fusion mechanism which scores the produced vector space embeddings of the previous cases and the new use case via a non-parametric decoder. This leads to a recommendation score S that the embodiment uses to rank and recommend machine learning pipelines that were deployed for the previous cases.

To produce a previous case embedding PE (i.e., a vector space embedding) for a given use case $i$ the embodiment considers the corresponding entity $\widehat{e_i}$ in the knowledge graph KG and produces a graph embedding GE defined as $e_i = f(\widehat{e_i})$ via the knowledge graph embedding model KGE. Similarly, the embodiment queries for the corresponding previous case description D denoted as $\widehat{d_i}$ stored in the knowledge graph KG and produces a description embedding DE defined as $d_i = f(\widehat{d_i})$ via the language model LM. In the next step, the embodiment concatenates the two embeddings and feeds them through the first neural network NN1, which is defined as $h\colon \mathbb{R}^{m+n} \to \mathbb{R}^p$ , forms a non-linear combination of both embeddings $v_i = h([e_i; d_i])$, and outputs it as the previous case embedding PE. The computation described in this paragraph corresponds to the left-hand side of Fig. 4.

Analogously, the embodiment computes the use case embedding UCE for the new use case. For that purpose, the embodiment receives from the user interface UI communicating with the user U (e.g., in the context of a static questionnaire) answers that specify certain properties of the new use case (that may or may not correspond to attributes stored in the knowledge graph KG) such as the availability of labeled data, the modality of the data, deployed hardware and other industrial assets, or the industry at hand. This leads to use case features UCF in the form of a feature vector $x \in \mathbb{R}^q$ where $q$ is the number of features. Note that $x$ representing the use case features UCF stores both numerical and categorical features (one/multi-hot encoded).

Moreover, the embodiment receives from the user interface UI the new case description UCD, which is a free-form text description of the new use case. The new case description UCD denoted as $d$ is in turn processed by $f$ (the language model LM) to produce the corresponding description embedding DE defined as $f(d)$. Concatenating and processing the use case features UCF (the feature vector $x$) and the description embedding DE via the second neural network NN2 defined as $h\colon \mathbb{R}^{q+n} \to \mathbb{R}^p$ leads to the use case embedding UCE defined as $v = h([e_i;d_i])$. The computation described in this paragraph corresponds to the right-hand side of Fig. 4.

Finally, to produce a relevance score $s_i$ (as part of the recommendation score S shown in Fig. 4), the embodiment computes the dot product between $v$ and $v_i$ (i.e., $s_i = \sum_{\{j=1\}}^{p} v_i v_{i,j}$). Then, by repeating the outlined procedure for all previous cases in the knowledge graph KG, the embodiment uses the relevance scores $\{s_1, s_2, ...\}$ to rank all previous cases and to identify the previous case with the highest relevance score. The user interface UI then outputs the machine learning pipeline from that previous case as a recommendation to the user U.

During training, the entirety of all parameters is tuned to produce high scores for matching use cases (e.g., pairs of use cases that employ the same machine learning pipeline) and produce low scores for non-matching use cases. For example, the parameters of the model can be determined via minimizing the personalized Ranking objective given by

$$L = - \sum_{u \in E} \sum_{i \in u_+} \sum_{j \neg \in u_+} log(s_i - s_j)$$

where $u \in E$ is an entity corresponding to a use case that serves as a proxy for a user-provided use case. $u_+$ denotes the set of use cases that deploy the same machine learning pipeline. The knowledge graph embedding model KGE and the language model LM can either be pretrained or trained in an end-to-end fashion with the remainder of the trainable parameters.

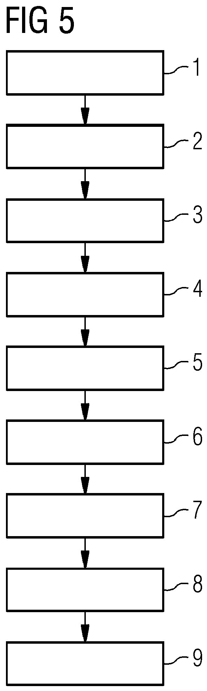

Fig. 5 shows a flowchart of a possible exemplary embodiment of a method for recommending a machine learning pipeline for an industrial use case.

In a first step 1, a user interface receives a new case description, which is a free-form text description of a new industrial use case for machine learning, and a set of user provided attributes that apply to the new industrial use case, wherein the user provided attributes are stored as use case features.

In a second step 2, a graph database provides a knowledge graph, wherein the knowledge graph contains for each previous case of a set of previous industrial use cases for machine learning

- a node representing the previous case,
- a previous case description of the previous case,
- at least one node representing an attribute of the previous case, and
- a node representing a machine learning pipeline that has been suitable for implementing machine learning for the previous case.

In a third step 3, a language model computes a description embedding for the new case description and for each previous case description.

In a fourth step 4, a knowledge graph embedding model encodes for each previous case a connectivity pattern of the knowledge graph into a graph embedding.

In a fifth step 5, a first neural network receives as input the graph embedding and the description embedding of the respective previous case, and computes for each previous case a previous case embedding.

In a sixth step 6, a second neural network receives as input the use case features and the description embedding of the new case description, and computes a use case embedding for the new industrial use case.

In a seventh step 7, a non-parametric decoder scores each previous case embedding against the use case embedding, thereby producing a relevance score for each previous case, in particular by computing a dot product.

In an eighth step 8, the previous case with the highest relevance score is selected.

In a ninth step 9, the user interface outputs the machine learning pipeline that is linked in the knowledge graph to the selected case.

While these steps may be executed in the particular order listed above, it is important to understand that many of these steps can be executed repeatedly, continuously, and/or in parallel to other steps.

For example, the parallel architecture of the first neural network NN1 and the second neural network NN2 shown in Fig. 4 allows for parallel processing of the fifth step 5 and the sixth step 6 at the same time. Also, the third step 3 can be processed in parallel to the fourth step 4, as these steps are executed by independent components.

To give another example, the second step 2 can be performed continuously to provide access to the knowledge graph whenever necessary. And even the first step 1 may be performed repeatedly in an incremental or iterative fashion in order to gather further information about the new industrial use case. In that case, some of the later steps need to be repeated as well in order to update the use case embedding, for example by repeating the third step 3, the sixth step 6, and the seventh step 7.

For example, the method can be executed by one or more processors. Examples of processors include a microcontroller or a microprocessor, an Application Specific Integrated Circuit (ASIC), or a neuromorphic microchip, in particular a neuromorphic processor unit. The processor can be part of any kind of computer, including mobile computing devices such as tablet computers, smartphones or laptops, or part of a server in a control room or cloud.

The above-described method may be implemented via a computer program product including one or more computer-readable storage media having stored thereon instructions executable by one or more processors of a computing system. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code, and the like, operating alone or in combination. Likewise, processing strategies may include multiprocessing, multitasking, parallel processing, and the like.

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

**Claims**

1. A computer implemented method for recommending a machine learning pipeline for an industrial use case, wherein the following operations are performed by components, and wherein the components are hardware components and/or software components executed by one or more processors:

   - receiving (1), by a user interface (UI), a new case description (UCD), which is a free-form text description of a new industrial use case for machine learning, and a set of user provided attributes (UPA) that apply to the new industrial use case, wherein the user provided attributes (UPA) are stored as use case features (UCF),
   - providing (2), by a graph database, a knowledge graph (KG), wherein the knowledge graph (KG) contains for each previous case of a set of previous industrial use cases for machine learning

     - a node representing the previous case,
     - a previous case description (D) of the previous case,
     - at least one node representing an attribute of the previous case, and
     - a node representing a machine learning pipeline that has been suitable for implementing machine learning for the previous case,

   - computing (3), by a language model (LM), a description embedding (DE) for the new case description (UCD) and for each previous case description (D),
   - encoding (4), by a knowledge graph embedding model (KGE), for each previous case a connectivity pattern of the knowledge graph (KG) into a graph embedding (GE),
   - computing (5) for each previous case, by a first neural network (NN1) receiving as input the graph embedding (GE) and the description embedding (DE) of the respective previous case, a previous case embedding (PE),
   - computing (6), by a second neural network (NN2) receiving as input the use case features (UCF) and the description embedding (DE) of the new case description (UCD), a use case embedding (UCE) for the new industrial use case,
   - scoring (7), by a non-parametric decoder, each previous case embedding (PE) against the use case embedding (UCE), thereby producing a relevance score for each previous case, in particular by computing a dot product,
   - selecting (8) the previous case with the highest relevance score, and
   - outputting (9), by the user interface (UI), the machine learning pipeline (MLP) that is linked in the knowledge graph (KG) to the selected case.

2. The method according to claim 1,

   - wherein the attributes of the previous cases include equipped hardware, data modalities, and labels.

3. The method according to any of the preceding claims,

- wherein the language model (LM) is a pretrained transformer model.

4. A system for recommending a machine learning pipeline for an industrial use case, comprising the following components, wherein the components are hardware components and/or software components executed by one or more processors:

- a user interface (UI), configured for receiving (1) a new case description (UCD), which is a free-form text description of a new industrial use case for machine learning, and a set of user provided attributes (UPA) that apply to the new industrial use case, wherein the user provided attributes (UPA) are stored as use case features (UCF),
- a graph database, configured for providing (2) a knowledge graph (KG), wherein the knowledge graph (KG) contains for each previous case of a set of previous industrial use cases for machine learning

- a node representing the previous case,
- a previous case description (D) of the previous case,
- at least one node representing an attribute of the previous case, and
- a node representing a machine learning pipeline that has been suitable for implementing machine learning for the previous case,

- a language model (LM), configured for computing (3) a description embedding (DE) for the new case description (UCD) and for each previous case description (D),
- a knowledge graph embedding model (KGE), configured for encoding (4) for each previous case a connectivity pattern of the knowledge graph (KG) into a graph embedding (GE),
- a first neural network (NN1), configured for receiving as input the graph embedding (GE) and the description embedding (DE) of the respective previous case, and for computing (5) for each previous case a previous case embedding (PE),
- a second neural network (NN2), configured for receiving as input the use case features (UCF) and the description embedding (DE) of the new case description (UCD), and for computing (6) a use case embedding (UCE) for the new industrial use case,
- a non-parametric decoder, configured for scoring (7) each previous case embedding (PE) against the use case embedding (UCE), thereby producing a relevance score for each previous case, in particular by computing a dot product,

- wherein the user interface (UI) is further configured for outputting (9) the machine learning pipeline (MLP) that is linked in the knowledge graph (KG) to the previous case with the highest relevance score.

5. Computer program product with program instructions for carrying out a method according to one of the method claims.

6. Provision device for the computer program product according to the preceding claim, wherein the provision device stores and/or provides the computer program product.

FIG 1

FIG 2

# FIG 3

| FIG 3A | FIG 3B | FIG 3C |
|--------|--------|--------|

# FIG 3A

```
┌─────────────────────────────────────────────┐
│                 foaf:Person                   │
├─────────────────────────────────────────────┤
│  foaf:familyName (0..1 <xsd:string>)          │
│  foaf:givenName (0..1 <xsd:string>)           │
├─────────────────────────────────────────────┤
│                                               │
└─────────────────────────────────────────────┘
                      ▲
                      │
                      │
┌─────────────────────────────────────────────┐
│                 :TaskExpert                   │
├─────────────────────────────────────────────┤
│  :deparment (1 <xsd:string>)                  │
│  :location (1 <xsd:string>)                   │
│  :email (1 <xsd:string>)                      │
│  :phone (1 <xsd:string>)                      │
├─────────────────────────────────────────────┤
│                                               │
└─────────────────────────────────────────────┘
```

1..* :expert

# FIG 3B

**pwc:Area**

:url (1 <xsd:string>)
dc:description (0..1 <xsd:string>)
:propertyKeywords (0..* <xsd:string>)
:activityKeywords (0..* <xsd:string>)

pwc:hasTask | 1
↓ 1..*

**pwc:Task**

0..1 | :url (1 <xsd:string>)
dc:description (0..1 <xsd:string>)
:propertyKeywords (0..* <xsd:string>)
:activityKeywords (0..* <xsd:string>)

pwc:hasSubtask | 1
↓ 1..*

**pwc:Subtask**

:url (1 <xsd:string>)
dc:description (0..1 <xsd:string>)
:propertyKeywords (0..* <xsd:string>) — 1
:activityKeywords (0..* <xsd:string>) | 0..*

pwc:hasMethod | 0..*
↓ 0..*

**pwc:Method**

:url (1 <xsd:string>) — 1
dc:description (0..1 <xsd:string>)
pwc:paperTitle (1 <xsd:string>)
pwc:paperAbstract (1 <xsd:string>)
pwc:paperUrl (0..1 <xsd:anyURI>)
pwc:codeUrl (0..1 <xsd:anyURI>)
:propertyKeywords (0..* <xsd:string>)

pwc:appliesToDataset | 0..*
↓ 0..*

**:Dataset**

:url (0..1 <xsd:string>) | 0..*
dc:title (0..1 <xsd:string>)
dc:description (0..1 <xsd:string>)
:containsClassLabels (1 <xsd:boolean>)
:containsNumericalLabels (1 <xsd:boolean>)
:numberOfFeatures (1 <xsd:int>) | 0..1
:numberOfClasses (1 <xsd:int>)
:hasIIPPath (1 <xsd:int>)

# FIG 3C

:UseCase
- dc:title (1 <xsd:string>)
- dc:description (1 <xsd:string>)
- :propertyKeywords (0..* <xsd:string>)
- :activityKeywords (0..* <xsd:string>)
- :hardwareRequirements (0..* <xsd:string>)
- :sensor (0..* <xsd:string>)
- :solved (1 <xsd:boolean>)
- :hasRecommendation (0..* <xsd:string>)

:UserFeedback
- :easeOfUse (1 <xsd:int>)
- :complexity (1 <xsd:int>)
- :useCaseFitness (1 <xsd:int>)

:achievedFeedback

:hasObjective

:associatedDataset

:solvedUsingPipeline

SUP

:realizesMethod

:subtaskPerformance

:pipelinePerformance

mlfm:Pipeline
- dc:title (0..1 <xsd:string>)
- dc:description (0..1 <xsd:string>)
- mlfm:key (0..1 <xsd:string>)
- mlfm:target (0..1 <xsd:string>)

:performancenRelation

:datasetPerformance

mlfm:hasInitialNode

mlfm:hasPredecessor

mlfm:Node
- dc:title (0..1 <xsd:string>)
- dc:description (0..1 <xsd:string>)
- mlfm:configSchema (0..1 <xsd:string>)
- mlfm:pluginNumber (1 <xsd:str>)

mlfm:hasSucessor

FIG 4

FIG 5

```
┌──────────────┐
│              │─ 1
└──────────────┘
       │
       ▼
┌──────────────┐
│              │─ 2
└──────────────┘
       │
       ▼
┌──────────────┐
│              │─ 3
└──────────────┘
       │
       ▼
┌──────────────┐
│              │─ 4
└──────────────┘
       │
       ▼
┌──────────────┐
│              │─ 5
└──────────────┘
       │
       ▼
┌──────────────┐
│              │─ 6
└──────────────┘
       │
       ▼
┌──────────────┐
│              │─ 7
└──────────────┘
       │
       ▼
┌──────────────┐
│              │─ 8
└──────────────┘
       │
       ▼
┌──────────────┐
│              │─ 9
└──────────────┘
```

Europäisches
Patentamt

European
Patent Office

Office européen
des brevets

# EUROPEAN SEARCH REPORT

Application Number

EP 23 17 0383

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GAROUANI MONCEF ET AL: "Towards big industrial data mining through explainable automated machine learning", THE INTERNATIONAL JOURNAL OF ADVANCED MANUFACTURING TECHNOLOGY, SPRINGER, LONDON, vol. 120, no. 1-2, 10 February 2022 (2022-02-10), pages 1169-1188, XP037797127, ISSN: 0268-3768, DOI: 10.1007/S00170-022-08761-9 [retrieved on 2022-02-10] * Section 4 * | 1-6 | INV. G06N3/042 G06N3/045 G06N3/088 G06N3/10 ADD. G06N5/02 |
| A | US 2022/300804 A1 (GUAN LAN [US] ET AL) 22 September 2022 (2022-09-22) * paragraph [0018] - paragraph [0063]; figures 1-7 * | 1-6 | |
| A | RAHUL NADKARNI ET AL: "Scientific Language Models for Biomedical Knowledge Base Completion: An Empirical Study", ARXIV.ORG, CORNELL UNIVERSITY LIBRARY, 201 OLIN LIBRARY CORNELL UNIVERSITY ITHACA, NY 14853, 21 September 2021 (2021-09-21), XP091046918, * Sections 2-4 * | 1-6 | TECHNICAL FIELDS SEARCHED (IPC) G06N |

The present search report has been drawn up for all claims

| Place of search | Date of completion of the search | Examiner |
|---|---|---|
| The Hague | 22 September 2023 | Jacobs, Jan-Pieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 0383

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2023

| Patent document cited in search report | | Publication date | Patent family member(s) | | Publication date |
|---|---|---|---|---|---|
| US 2022300804 | A1 | 22-09-2022 | AU | 2022201870 A1 | 06-10-2022 |
| | | | CN | 115115391 A | 27-09-2022 |
| | | | JP | 2022146915 A | 05-10-2022 |
| | | | US | 2022300804 A1 | 22-09-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NICKEL, M. ; TRESP, V. ; KRIEGEL, H.-P.** A three-way model for collective learning on multi-relational data. *Icml,* 2011, vol. 11, 809-816
- **BORDES, A. et al.** Translating embeddings for modeling multi-relational data. *Advances in neural information processing systems,* 2013, 2787-2795
- **SCHLICHTKRULL, M. ; KIPF, T.N. ; BLOEM, P. ; VAN DEN BERG, R. ; TITOV, I. ; WELLING, M.** Modeling Relational Data with Graph Convolutional Networks. *arXiv preprint arXiv:1703.06103,* 2017
- **VASHISHTH, SHIKHAR et al.** Composition-based multi-relational graph convolutional networks. *arXiv preprint arXiv:1911.03082v2,* 2019, https://doi.org/10.48550/arXiv.1911.03082
- **VASWANI et al.** Attention is all you need. *arXiv:1706.03762v5 [cs.CL,* 21 March 2023, https://doi.org/10.48550/arXiv.1706.03762